# EUROPEAN PATENT APPLICATION

(11) **EP 4 800 778 A1**
(43) Date of publication of application: **02.09.2026**
(21) Application number: 24882893.1
(22) Date of filing: 25.10.2024
(51) Int. Cl.: H01M 4/62, H01M 4/13, H01M 4/139, H01M 10/42, H01M 50/586, C09D 5/00, C09D 133/26, C09D 7/61, C09D 7/45, C09D 7/47

(54) **COMPOSITION FOR COATING UNCOATED PORTION OF BATTERY, METHOD FOR COATING UNCOATED PORTION OF BATTERY BY USING SAME, AND ELECTRODE COMPRISING COMPOSITION FOR COATING UNCOATED PORTION OF BATTERY**

(30) Priority: 25.10.2023 KR 20230143509
(71) Applicant: Hansol Chemical Co., Ltd, Seoul 06169 (KR)
(72) Inventor: LEE, Nam-Joo, Wanju-gun, Jeonbuk-do 55321 (KR); CHO, Seung-Wan, Wanju-gun, Jeonbuk-do 55321 (KR); LEE, Go-Eun, Wanju-gun, Jeonbuk-do 55321 (KR); KIM, Young-Su, Wanju-gun, Jeonbuk-do 55321 (KR); KIM, Jin-Yeong, Wanju-gun, Jeonbuk-do 55321 (KR); LEE, Sang-Won, Wanju-gun, Jeonbuk-do 55321 (KR); OH, Sae-Wook, Wanju-gun, Jeonbuk-do 55321 (KR); KWON, Se-Man, Wanju-gun, Jeonbuk-do 55321 (KR)
(74) Representative: Ipsilon
(86) International application number: PCT/KR2024/016391
(87) International publication number: WO 2025/089866

(57) **Abstract**

Proposed are a composition for coating an uncoated portion of a battery, a method for coating an uncoated portion of a battery by using the composition, and an electrode including the composition for coating the uncoated portion of the battery. More specifically, there is provided a composition for coating an uncoated portion of a battery, the composition being capable of forming a stable coating layer due to excellent heat resistance, excellent electrolyte stability, and excellent adhesive strength between a coating layer on the uncoated portion and the uncoated portion. Furthermore, there is provided a method of coating an uncoated portion of a battery and an electrode in which an uncoated portion is coated that are using the composition.

## Description

### Technical Field

The present disclosure relates to a composition for coating an uncoated portion of a battery, a method for coating an uncoated portion of a battery by using the composition for coating the uncoated portion of the battery, and an electrode including the composition for coating the uncoated portion of the battery. More particularly, the present disclosure relates to a composition for coating an uncoated portion of a battery, the composition having excellent heat resistance, preventing occurrence of a short circuit, and having electrolyte resistance.

### Background Art

Lithium secondary batteries have high energy density and are widely used in electric, electronic, communication, and computer industries, and application fields thereof are expanding from small lithium secondary batteries for portable electronic devices to high-capacity secondary batteries such as those used in hybrid vehicles and electric vehicles.

As the application fields expand, interest in development of lithium secondary batteries is also increasing. Particularly, in order to increase energy density of lithium secondary batteries, technology is increasingly integrated and advanced.

In order to increase lifespan and performance of a secondary battery, cells in the secondary battery are required to be stacked thinly and densely. However, when the secondary battery is used at high output for a long period of time, there is a problem in that internal short circuit or voids occur due to overcharge and overdischarge, or stability of the battery is reduced due to dendritic growth.

Although a negative electrode and a positive electrode in the battery are physically insulated by a separator, when a short circuit occurs between the negative electrode and the positive electrode due to physical force or chemical external force applied from inside or outside, there is a possibility of heat generation and explosion, so that there is a limitation in securing stability of the battery only with the separator. Particularly, when the separator is exposed to a temperature of about 130 degrees Celsius or higher due to occurrence of a short circuit, thermal shrinkage occurs. Furthermore, when a region of the short circuit expands, thermal runaway may occur.

There is a method of supplementing heat resistance by applying ceramic coating to a separator formed of polyolefin having poor heat resistance, but such a method has limitations. Accordingly, insulating and coating a noncoated area of a positive electrode, i.e., insulating and coating an uncoated portion on which a positive electrode active material is not coated, has been devised as a method for compensating for heat resistance.

Conventionally, as a method for insulating and coating the uncoated portion, a method of winding an insulating tape has been generally used. However, the method of winding the insulating tape is complicated and has a problem in that a thickness of a battery increases, so that there is a need for research on a composition capable of forming a stable coating layer.

### [Document of Related Art]

### [Patent Document]

(Patent Document 1) Korean Patent No. 10-0982003

### Disclosure

### Technical Problem

An objective of the present disclosure is to provide a composition for coating an uncoated portion of a battery in which the composition has excellent adhesive strength between a coating layer of an uncoated portion of an electrode and the uncoated portion of the electrode so that the coating layer is stably formed, has excellent heat resistance, and has excellent electrolyte stability by using a polymer that does not dissolve or swell in an electrolyte, and the objective of the present disclosure is to provide a method for coating an uncoated portion of a battery by using the composition, and an electrode including the composition.

The technical problems that are intended to be addressed in the present disclosure are not restricted to the above described problems, and other problems, which are not mentioned herein, could be clearly understood by those of ordinary skill in the art from details described below.

### Technical Solution

According to an aspect of the present disclosure,
there is provided a composition for coating an uncoated portion of a battery, the composition including:
a polymer;
inorganic particles; and
a solvent.

According to another aspect of the present disclosure,
there is provided a method for coating an uncoated portion of a battery, the method including:
coating the composition for coating the uncoated portion of the battery on the uncoated portion.

According to still another aspect of the present disclosure,
there is provided an electrode including:
a coating layer on an uncoated portion of the electrode, the coating layer including the composition for coating the uncoated portion of the battery.

### Advantageous Effects

As described above, the composition for coating the uncoated portion of the battery of the present disclosure has excellent adhesive strength between the coating layer on the uncoated portion and the uncoated portion of the electrode, so that the coating layer is stably formed.

In addition, since the composition for coating the uncoated portion of the battery of the present disclosure has excellent heat resistance and excellent electrolyte stability, the electrode in which the uncoated portion is coated using the composition for coating the uncoated portion of the battery of the present disclosure effectively prevents occurrence of a short circuit, and stability of the battery may be increased.

### Best Mode

Prior to the description, it should be understood that the terms used in the specification and the appended claims should not be construed as limited to general and dictionary meanings, but interpreted on the basis of the meanings and concepts corresponding to technical aspects of the present disclosure on the basis of the principle that the inventor is allowed to define terms appropriately for the best explanation.

Therefore, the description proposed herein is just an exemplary embodiment for the purpose of illustrations only, not intended to limit the scope of the present disclosure, so it should be understood that other equivalents and modifications could be made thereto without departing from the scope of the present disclosure at the time at which the present application is filed.

In the following embodiments, singular expressions include plural expressions unless the context clearly indicates otherwise. It will be further understood that the terms "comprises" or "have" used in this specification, specify the presence of stated features, steps, operations, components, parts, or a combination thereof, but do not preclude the presence or addition of one or more other features, numerals, steps, operations, components, parts, or a combination thereof.

When various parameters are given as ranges, preferred ranges, or lists of preferred upper values and preferred lower values in the present specification, it should be understood that all ranges formed by any combination of any upper range limit or preferred value and any lower range limit or preferred value are specifically disclosed, regardless of whether the ranges are separately disclosed.

When a numerical range is described in the present specification, unless otherwise stated, the range is intended to include endpoints thereof and all integers and fractions within the range. The scope of the present disclosure is not intended to be limited to specific values described when defining the range.

In the present specification, in expressions indicating a numerical range such as "a to b" and "a ~ b", "to" and "~" are defined as equal to or larger than a (≥ a) and equal to or less than b (≤ b).

According to an aspect of the present disclosure, a composition for coating an uncoated portion of a battery may include a polymer, inorganic particles, and a solvent.

The uncoated portion refers to a portion of an electrode on which an electrode active material is not coated. When the uncoated portion of the battery is coated using the composition for coating the uncoated portion of the battery, an insulating film may be formed at a boundary at which a negative electrode and a positive electrode face each other, thereby reducing occurrence of a short circuit due to physical contact between the negative electrode and the positive electrode. In addition, the composition for coating the uncoated portion of the battery includes a polymer having high electrolyte stability to form a stable insulating coating layer, thereby increasing stability of the battery.

In an embodiment, a glass transition temperature (Tg) of the polymer may be 0 degrees Celsius or more and 230 degrees Celsius or less.

For example, the glass transition temperature (Tg) of the polymer may be 0 degrees Celsius or more and 4 degrees Celsius or less, 4 degrees Celsius or more and 15 degrees Celsius or less, 15 degrees Celsius or more and 25 degrees Celsius or less, 25 degrees Celsius or more and 35 degrees Celsius or less, 35 degrees Celsius or more and 45 degrees Celsius or less, 45 degrees Celsius or more and 55 degrees Celsius or less, 55 degrees Celsius or more and 75 degrees Celsius or less, 75 degrees Celsius or more and 95 degrees Celsius or less, 95 degrees Celsius or more and 115 degrees Celsius or less, 115 degrees Celsius or more and 135 degrees Celsius or less, 135 degrees Celsius or more and 155 degrees Celsius or less, 155 degrees Celsius or more and 175 degrees Celsius or less, 175 degrees Celsius or more and 195 degrees Celsius or less, 195 degrees Celsius or more and 210 degrees Celsius or less, or 210 degrees Celsius or more and 230 degrees Celsius or less.

In an embodiment, an electrolyte swelling degree of the polymer at room temperature may be 30% or less.

For example, when the polymer is immersed in an electrolyte at 25 degrees Celsius for 7 days, the electrolyte swelling degree of the polymer may be 30% or less, 25% or less, 20% or less, or 15% or less. That is, the polymer of the present disclosure has excellent stability in the electrolyte even when the polymer is immersed in the electrolyte for a long time.

In addition, when the polymer is immersed in the electrolyte at 80 degrees Celsius for 2 hours, the electrolyte swelling degree of the polymer may be, for example, 30% or less, 25% or less, 20% or less, 15% or less, 10% or less, or 5% or less.

In an embodiment, the polymer may include an acrylamide copolymer, styrene-butadiene rubber, an acrylate polymer, an acrylate copolymer, a methacrylate polymer, a methacrylate copolymer, an acrylic acid polymer, an acrylic acid copolymer, a vinyl alcohol polymer, a styrene polymer, or a combination thereof.

The acrylate polymer may be, for example, a homopolymer of an acrylate or an acrylate copolymer, the methacrylate polymer may be, for example, a homopolymer of a methacrylate or a methacrylate copolymer, and the acrylic acid polymer may be, for example, a homopolymer of acrylic acid or an acrylic acid copolymer.

Since the acrylamide copolymer has a strong hydrophilic functional group (such as a nitrile group), the acrylamide copolymer has low affinity for an electrolyte, so that the acrylamide copolymer may satisfy the electrolyte swelling degree range of the present disclosure. The styrene-butadiene rubber has solvent resistance and forms crosslinking, so that the styrene-butadiene rubber may satisfy the electrolyte swelling degree range of the present disclosure.

That is, due to the low electrolyte swelling degree, when the polymer is used, the composition for coating the uncoated portion of the battery, which has excellent stability in an electrolyte, may be manufactured.

In one embodiment, the acrylamide copolymer may include an acrylamide-based monomer unit and a vinylpyrrolidone-based monomer unit, and a ratio of the number of moles of the acrylamide-based monomer unit to the number of moles of the vinylpyrrolidone-based monomer unit (the number of moles of the acrylamide-based monomer unit / the number of moles of the vinylpyrrolidone-based monomer unit) may be 1 or more and 3.5 or less.

For example, the ratio of the number of moles of the acrylamide-based monomer unit to the number of moles of the vinylpyrrolidone-based monomer unit (the number of moles of the acrylamide-based monomer unit / the number of moles of the vinylpyrrolidone-based monomer unit) may be 1.5 or more and 3.5 or less, 1.5 or more and 3.0 or less, 2.0 or more and 3.0 or less, or 2.0 or more and 2.5 or less.

When the ratio of the number of moles of the acrylamide-based monomer unit to the number of moles of the vinylpyrrolidone-based monomer unit (the number of moles of the acrylamide-based monomer unit / the number of moles of the vinylpyrrolidone-based monomer unit) is less than the range described in the present disclosure, adhesive strength with a substrate may decrease. Furthermore, when the ratio exceeds the range described in the present disclosure, stability of the composition for coating the uncoated portion of the battery may decrease.

In an embodiment, the polymer may include the acrylamide copolymer and the styrene-butadiene rubber, and a ratio of a weight of the acrylamide copolymer to a weight of the styrene-butadiene rubber (the weight of the acrylamide copolymer / the weight of the styrene-butadiene rubber) may be 1 or more and 10 or less.

For example, the ratio of the weight of the acrylamide copolymer to the weight of the styrene-butadiene rubber (the weight of the acrylamide copolymer / the weight of the styrene-butadiene rubber) may be 1 or more and 9.5 or less, 1.5 or more and 9 or less, 2 or more and 8 or less, 2 or more and 7 or less, 2 or more and 6 or less, 2 or more and 5 or less, 2.5 or more and 5 or less, or 3 or more and 5 or less.

When the ratio of the weight of the acrylamide copolymer to the weight of the styrene-butadiene rubber (the weight of the acrylamide copolymer / the weight of the styrene-butadiene rubber) is less than the range described in the present disclosure, cohesive force with inorganic particles may decrease. Furthermore, when the ratio exceeds the range described in the present disclosure, adhesive strength with a substrate surface may decrease.

In an embodiment, the polymer may include the acrylamide copolymer and the acrylate polymer, and a ratio of a weight of the acrylamide copolymer to a weight of the acrylate polymer (the weight of the acrylamide copolymer / the weight of the acrylate polymer) may be 2 or more and 6 or less.

For example, the ratio of the weight of the acrylamide copolymer to the weight of the acrylate polymer (the weight of the acrylamide copolymer / the weight of the acrylate polymer) may be 2.5 or more and 6 or less, 2.5 or more and 5.5 or less, 3 or more and 5.5 or less, 3 or more and 5 or less, 3.5 or more and 5 or less, or 3.5 or more and 4.5 or less.

When the ratio of the weight of the acrylamide copolymer to the weight of the acrylate polymer (the weight of the acrylamide copolymer / the weight of the acrylate polymer) is less than the range described in the present disclosure, cohesive force with inorganic particles may decrease. Furthermore, when the ratio exceeds the range described in the present disclosure, adhesive strength with a substrate surface may decrease.

In an embodiment, the inorganic particles may include alumina, boehmite, or a combination thereof.

When the inorganic particles are included, the composition for coating the uncoated portion of the battery may have excellent thermochemical stability and excellent physical properties.

In an embodiment, the composition for coating the uncoated portion of the battery may have a ratio of a weight of the inorganic particles to a weight of the polymer (the weight of the inorganic particles / the weight of the polymer) of 5 or more and 20 or less.

For example, the ratio of the weight of the inorganic particles to the weight of the polymer (the weight of the inorganic particles / the weight of the polymer) may be 6 or more and 20 or less, 7 or more and 20 or less, 8 or more and 19 or less, 9 or more and 18 or less, 10 or more and 17 or less, or 11 or more and 16 or less.

When the ratio of the weight of the inorganic particles to the weight of the polymer (the weight of the inorganic particles / the weight of the polymer) is less than the range described in the present disclosure, dispersibility of the composition for coating the uncoated portion of the battery may decrease, thereby reducing adhesive strength and coatability. Furthermore, when the ratio exceeds the range in the present disclosure, adhesive strength with a substrate may decrease.

A content of the polymer may be larger than 1 part by weight and less than 10 parts by weight per 300 parts by weight of the solvent. For example, the content of the polymer may be larger than 2 parts by weight and less than 10 parts by weight, larger than 3 parts by weight and less than 10 parts by weight, larger than 4 parts by weight and less than 10 parts by weight, or larger than 5 parts by weight and less than 10 parts by weight per 300 parts by weight of the solvent. When the content of the polymer is less than the range described in the present disclosure, adhesive strength with a substrate may decrease. Furthermore, when the content exceeds the range described in the present disclosure, dispersibility of the composition for coating the uncoated portion of the battery may decrease, thereby reducing adhesive strength and coatability.

In addition, a content of the inorganic particles may be 90 parts by weight or more and 95 parts by weight or less per 300 parts by weight of the solvent. For example, the content of the inorganic particles may be 90 parts by weight or more and 94.5 parts by weight or less, 90.5 parts by weight or more and 94.5 parts by weight or less, 90.5 parts by weight or more and 94 parts by weight or less, 91 parts by weight or more and 94 parts by weight or less, 91 parts by weight or more and 93.5 parts by weight or less, 91.5 parts by weight or more and 93.5 parts by weight or less, 91.5 parts by weight or more and 93 parts by weight or less, or 92 parts by weight or more and 93 parts by weight or less per 300 parts by weight of the solvent.

The composition for coating the uncoated portion of the battery may have a ratio of a weight of the solvent to a sum of a weight of the polymer and a weight of the inorganic particles (the weight of the solvent / (the weight of the polymer + the weight of the inorganic particles)) of 2 or more and 4 or less. For example, the ratio of the weight of the solvent to the sum of the weight of the polymer and the weight of the inorganic particles (the weight of the solvent / (the weight of the polymer + the weight of the inorganic particles)) may be 2.2 or more and 4 or less, 2.2 or more and 3.8 or less, 2.4 or more and 3.8 or less, 2.4 or more and 3.6 or less, 2.6 or more and 3.6 or less, 2.8 or more and 3.6 or less, or 2.8 or more and 3.5 or less. When the ratio of the weight of the solvent to the sum of the weight of the polymer and the weight of the inorganic particles (the weight of the solvent / (the weight of the polymer + the weight of the inorganic particles)) is less than the range described in the present disclosure, viscosity of the composition may increase, thereby reducing dispersibility and coating stability. When the ratio of the weight of the solvent to the sum of the weight of the polymer and the weight of the inorganic particles (the weight of the solvent / (the weight of the polymer + the weight of the inorganic particles)) exceeds the range described in the present disclosure, surface tension of the composition may excessively increase, and thus additional input of a leveling agent may be required, thereby reducing adhesive strength with a substrate.

In an embodiment, the composition for coating the uncoated portion of the battery may further include a dispersant and a leveling agent, and a ratio of a weight of the leveling agent to a weight of the dispersant (the weight of the leveling agent / the weight of the dispersant) may be 0.1 or more and 0.3 or less.

For example, the ratio of a weight of the leveling agent to a weight of the dispersant (the weight of the leveling agent / the weight of the dispersant) may be 0.2 or more and 0.3 or less.

Preferably, when the polymer includes the acrylamide copolymer and the styrene-butadiene rubber, the ratio of the weight of the leveling agent to the weight of the dispersant (the weight of the leveling agent / the weight of the dispersant) may be 0.1 or more and 0.3 or less. Furthermore, when the polymer includes the acrylamide copolymer, the ratio of the weight of the leveling agent to the weight of the dispersant (the weight of the leveling agent / the weight of the dispersant) may be 0.2 or more and 0.3 or less.

When the ratio of the weight of the leveling agent to the weight of the dispersant (the weight of the leveling agent / the weight of the dispersant) is less than the range described in the present disclosure, surface tension of the composition may excessively increase, thereby reducing coatability. Furthermore, when the ratio exceeds the range described in the present disclosure, an adhesive mechanism of the polymer acting as a binder may decrease.

In an embodiment, a ratio of the weight of the dispersant to the weight of the inorganic particles (the weight of the dispersant / the weight of the inorganic particles) may be 0.005 or more and 0.015 or less, and a ratio of the weight of the leveling agent to the weight of the polymer (the weight of the leveling agent / the weight of the polymer) may be 0.01 or more and 0.5 or less.

For example, the ratio of the weight of the dispersant to the weight of the inorganic particles (the weight of the dispersant / the weight of the inorganic particles) may be 0.007 or more and 0.013 or less, or 0.009 or more and 0.011 or less, and the ratio of the weight of the leveling agent to the weight of the polymer (the weight of the leveling agent / the weight of the polymer) may be 0.02 or more and 0.45 or less, 0.03 or more and 0.40 or less, or 0.04 or more and 0.35 or less.

Preferably, when the polymer includes the acrylamide copolymer and the styrene-butadiene rubber, the ratio of the weight of the dispersant to the weight of the inorganic particles (the weight of the dispersant / the weight of the inorganic particles) may be 0.005 or more and 0.015 or less, and the ratio of the weight of the leveling agent to the weight of the polymer (the weight of the leveling agent / the weight of the polymer) may be 0.01 or more and 0.5 or less. In addition, when the polymer includes the acrylamide copolymer, preferably, the ratio of the weight of the dispersant to the weight of the inorganic particles (the weight of the dispersant / the weight of the inorganic particles) may be 0.005 or more and 0.015 or less, and the ratio of the weight of the leveling agent to the weight of the polymer (the weight of the leveling agent / the weight of the polymer) may be 0.02 or more and 0.45 or less.

When the ratio of the weight of the dispersant to the weight of the inorganic particles is less than the range described in the present disclosure, dispersibility of a slurry composition may deteriorate, thereby significantly reducing stability and coatability of the slurry composition. Furthermore, when the ratio exceeds the range described in the present disclosure, adhesive strength between the uncoated portion and the coating layer may decrease. In addition, when the ratio of the weight of the leveling agent to the weight of the polymer (the weight of the leveling agent / the weight of the polymer) is less than the range described in the present disclosure, surface tension of the slurry composition may excessively increase, thereby deteriorating coatability. Furthermore, when the ratio exceeds the range described in the present disclosure, an adhesive mechanism of the polymer acting as a binder may decrease.

According to another aspect of the present disclosure, a method for coating the uncoated portion of the battery may include coating the composition for coating the uncoated portion of the battery on the uncoated portion.

In an embodiment, the coating may be a doctor blade coating, a dip coating, a gravure coating, a slit die coating, a spin coating, a comma coating, a bar coating, a reverse roll coating, a screen coating, or a cap coating, but is not limited thereto.

In an embodiment, the method for coating the uncoated portion of the battery may further include a first drying after the coating.

In the first drying, a drying temperature may be 50 degrees Celsius or more and 80 degrees Celsius or less, and a drying time may be 5 minutes or more and 15 minutes or less.

When the drying temperature exceeds the range described in the present disclosure, the composition for coating the uncoated portion of the battery may not sufficiently penetrate into a substrate, thereby reducing adhesive strength with the substrate. Furthermore, when the drying temperature is less than the range described in the present disclosure, a time required for drying may increase, thereby deteriorating processability. In addition, when the drying time exceeds the range described in the present disclosure, processability may deteriorate. Furthermore, when the drying time is less than the range described in the present disclosure, moisture content of the coating layer may increase, thereby deteriorating performance of the battery.

In an embodiment, the method for coating the uncoated portion of the battery may further include a second drying after the first drying.

In the second drying, a drying temperature may be 100 degrees Celsius or more and 150 degrees Celsius or less, and a drying time may be 5 minutes or more and 15 minutes or less.

When the drying temperature exceeds the range described in the present disclosure, physical properties of the polymer may change. Furthermore, when the drying temperature is less than the range described in the present disclosure, processability may deteriorate. In addition, when the drying time exceeds the range described in the present disclosure, processability may deteriorate. Furthermore, when the drying time is less than the range described in the present disclosure, moisture content of the coating layer may increase, thereby deteriorating performance of the battery.

In an embodiment, the first drying and the second drying may be hot air drying, heated air drying, vacuum drying, or infrared drying, but are not limited thereto, and drying may be performed using a drying method commonly known in the art.

According to another aspect of the present disclosure, an electrode may include a coating layer on the uncoated portion, the coating layer including the composition for coating the uncoated portion of the battery.

In an embodiment, the coating layer may be formed on one surface or both surfaces of the uncoated portion of the electrode, and a thickness of the coating layer may be 4 µm or more and 10 µm or less.

When the thickness of the coating layer is less than the range described in the present disclosure, adhesive strength between the coating layer on the uncoated portion and the uncoated portion and heat resistance of the composition for coating the uncoated portion of the battery may significantly decrease. Furthermore, when the thickness of the coating layer exceeds the range described in the present disclosure, the thickness of the coating layer may be excessively large, thereby increasing a thickness of the battery, and adhesive strength between the coating layer on the uncoated portion and the uncoated portion may decrease.

In an embodiment, adhesive strength between the uncoated portion and the coating layer on the uncoated portion may be 200 N/m or more.

For example, adhesive strength between the uncoated portion and the coating layer on the uncoated portion may be 210 N/m or more, 220 N/m or more, 230 N/m or more, 240 N/m or more, or 250 N/m or more.

When the adhesive strength between the uncoated portion and the coating layer on the uncoated portion is less than the range described in the present disclosure, it may be difficult to maintain a stable coating layer on the uncoated portion.

In an embodiment, the electrode may be a negative electrode or a positive electrode. Preferably, the electrode may be the positive electrode.

The present disclosure may provide a secondary battery including the positive electrode, the negative electrode, and a separator interposed between the positive electrode and the negative electrode.

The positive electrode may include a positive electrode active material and a positive electrode current collector, and the negative electrode may include a negative electrode active material and a negative electrode current collector.

In an embodiment, the positive electrode active material may be any positive electrode active material available in the art. Specific examples of the positive electrode active material include: lithium metal; lithium cobalt-based oxides such as LiCoO₂; lithium manganese-based oxides such as Li₁₊ₓMn₂₋ₓO₄ (where x is 0 to 0.33), LiMnO₃, LiMn₂O₃, and LiMnO₂; lithium copper oxides such as Li₂CuO₂; vanadium oxides such as LiV₃O₈, V₂O₅, and Cu₂V₂O₇; lithium nickel-based oxides represented by LiNi₁₋ₓMₓO₂ (where M is Co, Mn, Al, Cu, Fe, Mg, B, or Ga, and x is 0.01 to 0.3); lithium manganese composite oxides represented by LiMn₂₋ₓMₓO₂ (where M is Co, Ni, Fe, Cr, Zn, or Ta, and x is 0.01 to 0.1) or Li₂Mn₃MO₈ (where M is Fe, Co, Ni, Cu, or Zn); lithium-nickel-manganese-cobalt-based oxides represented by Li(NiₐCo_{b}Mn_{c})O₂ (where 0<a<1, 0<b<1, 0<c<1, and a+b+c=1); sulfur or disulfide compounds; phosphates such as LiFePO₄, LiMnPO₄, LiCoPO₄, and LiNiPO₄; and Fe₂(MoO₄)₃, but are not limited thereto.

In an embodiment, the positive electrode current collector may be any positive electrode current collector available in the art. Specific examples of the positive electrode current collector include aluminum foil, aluminum mesh, copper foil, and so on, but are not limited thereto.

In an embodiment, the negative electrode active material may be any negative electrode active material available in the art. Specifically, as the negative electrode active material, a carbon-based negative electrode active material such as crystalline carbon, amorphous carbon, or a carbon composite may be used alone or in combination of two or more, but is not limited thereto. In addition, the negative electrode current collector may be any negative electrode current collector available in the art, and specific examples of the negative electrode current collector include copper, but are not limited thereto.

In an embodiment, the separator is an insulator configured to separate the negative electrode and the positive electrode and to provide a passage through which only lithium ions are capable of being moved. For this purpose, the separator has good wettability with respect to an electrolyte, and a porous polymer film such as PE or PP, or a porous nonwoven fabric, may be used. In order to prevent short circuit of the battery, a coated separator including a ceramic coating layer having enhanced heat resistance and mechanical strength may be used, and the coating layer may be formed as a single layer or multiple layers.

The separator may include a porous substrate, and the porous substrate may be any porous substrate commonly used in electrochemical devices. For example, a polyolefin-based porous membrane or a nonwoven fabric may be used, but is not particularly limited thereto.

The separator may be a porous substrate formed of any one selected from the group consisting of polyethylene, polypropylene, polybutylene, polypentene, polyethylene terephthalate, polybutylene terephthalate, polyester, polyacetal, polyamide, polycarbonate, polyimide, polyetheretherketone, polyethersulfone, polyphenylene oxide, polyphenylene sulfide, and polyethylene naphthalate, or a mixture of two or more thereof.

In an embodiment, the secondary battery may be manufactured by, in addition to a winding process, a lamination stack process and a folding process of the separator and the electrode. In addition, a case accommodating the battery may be a cylindrical-type case, a prismatic-type case, a pouch-type case, or a coin-type case. In addition, the lithium secondary battery may be used in small to large-sized applications such as automobiles and electronic devices.

### Mode for Invention

Hereinafter, the present disclosure will be described in more detail through following embodiments. However, the following embodiments are provided for more specifically describing the present disclosure, and the scope of the present disclosure is not limited by the following embodiments.

### [Examples and Comparative Examples: Preparation of Composition for Coating Uncoated Portion of Battery]

In preparing the composition for coating the uncoated portion of the battery, an SP-230 acrylamide copolymer solution (polymer A) of Hansol Chemical, an A-200 styrene-butadiene rubber (polymer B) of Hansol Chemical, a Y-123 acryl emulsion (polymer C) of another company, and an SP-30 polyvinyl alcohol solution (polymer D) of Hansol Chemical are used as polymers.

The acrylamide copolymer of polymer A has a molar ratio of an acrylamide-based monomer unit to a vinylpyrrolidone-based monomer unit of 7:3.

### Examples 1-1 to 1-5 and Comparative Examples 1-1 and 1-2

Boehmite (average particle diameter: 0.15 µm) as inorganic particles in an amount of 92.3 parts by weight, ammonium polyacrylate (product name: HDA) of Hansol Chemical as a dispersant in an amount of 0.5 parts by weight, and ultra-pure water in an amount of 300 parts by weight are mixed and dispersed using a ball milling method or a mechanical stirrer to prepare a first slurry.

Then, 5.0 parts by weight of the acrylamide copolymer solution (polymer A) of Hansol Chemical are added to the first slurry as a polymer and dispersed to prepare a second slurry.

Thereafter, 0.1 parts by weight of a polyether-modified silicone as a leveling agent and 0.1 parts by weight of polyvinyl alcohol having a saponification value of 80% as a wetting agent are added to the second slurry and dispersed to prepare the composition for coating the uncoated portion of the battery of Example 1-1.

The compositions for coating the uncoated portion of the battery of Examples 1-2 to 1-5 and Comparative Examples 1-1 and 1-2 are prepared in the same manner as in Example 1-1 except that the content of the polymer is changed. The content of the polymer used is shown in Table 1 below.

**[Table 1]**

| Composition for coating | Content of polymer A |
|---|---|
| uncoated portion of battery | (parts by weight) |
| Example 1-1 | 3.0 |
| Example 1-2 | 5.0 |
| Example 1-3 | 6.0 |
| Example 1-4 | 7.0 |
| Example 1-5 | 8.0 |
| Comparative Example 1-1 | 1.0 |
| Comparative Example 1-2 | 10.0 |

In Table 1, polymer A refers to the acrylamide copolymer solution of Hansol Chemical.

### Examples 2-1 to 2-5

Boehmite (average particle diameter: 0.15 µm) as inorganic particles in an amount of 92.3 parts by weight, ammonium polyacrylate (product name: HDA) of Hansol Chemical as a dispersant in an amount of 0.5 parts by weight, and ultra-pure water in an amount of 300 parts by weight are mixed and dispersed using a ball milling method or a mechanical stirrer to prepare a first slurry.

Then, 4.0 parts by weight of the acrylamide copolymer solution (polymer A) of Hansol Chemical and 1.0 part by weight of A-200 styrene-butadiene rubber (polymer B) of Hansol Chemical are added to the first slurry as polymers and dispersed to prepare a second slurry.

Thereafter, 0.1 part by weight of a leveling agent and 0.1 part by weight of a wetting agent are added to the second slurry and dispersed to prepare the composition for coating the uncoated portion of the battery of Example 2-1.

The compositions for coating the uncoated portion of the battery of Examples 2-2 to 2-5 are prepared in the same manner as in Example 2-1 except that the contents of polymer A and polymer B are changed. The content of the polymer used is shown in Table 2 below.

**[Table 2]**

| Composition for coating uncoated portion of battery | Content of polymer A (parts by weight) | Content of polymer B (parts by weight) | Total content of polymer (parts by weight) |
|---|---|---|---|
| Example 2-1 | 4.0 | 1.0 | 5.0 |
| Example 2-2 | 6.3 | 0.7 | 7.0 |
| Example 2-3 | 5.6 | 1.4 | 7.0 |
| Example 2-4 | 4.9 | 2.1 | 7.0 |
| Example 2-5 | 4.2 | 2.8 | 7.0 |

In Table 2, polymer A refers to the acrylamide copolymer solution of Hansol Chemical, and polymer B refers to A-200 styrene-butadiene rubber of Hansol Chemical.

### Examples 3-1, 3-2, and Comparative Examples 3-1 to 3-5

Boehmite (average particle diameter: 0.15 µm) as inorganic particles in an amount of 92.3 parts by weight, ammonium polyacrylate (product name: HDA) of Hansol Chemical as a dispersant in an amount of 0.5 parts by weight, and ultra-pure water in an amount of 300 parts by weight are mixed and dispersed using a ball milling method or a mechanical stirrer to prepare a first slurry.

Then, 4.9 parts by weight of the acrylamide copolymer solution (polymer A) of Hansol Chemical and 2.1 parts by weight of an acryl emulsion (polymer C) of another company are added to the first slurry as polymers and dispersed to prepare a second slurry.

Thereafter, 0.1 part by weight of a leveling agent and 0.1 part by weight of a wetting agent are added to the second slurry and dispersed to prepare the composition for coating the uncoated portion of the battery of Example 3-1.

The compositions for coating the uncoated portion of the battery of Example 3-2 and Comparative Examples 3-1 to 3-5 are prepared in the same manner as in Example 3-1 except that the contents of polymer A and polymer C are changed. The content of the polymer used is shown in Table 3 below.

**[Table 3]**

| Composition for coating uncoated portion of battery | Content of polymer A (parts by weight) | Content of polymer C (parts by weight) | Total content of polymer (parts by weight) |
|---|---|---|---|
| Example 3-1 | 4.9 | 2.1 | 7.0 |
| Example 3-2 | 5.6 | 1.4 | 7.0 |
| Comparative Example 3-1 | 4.5 | 0.5 | 5.0 |
| Comparative Example 3-2 | 4.0 | 1.0 | 5.0 |
| Comparative Example 3-3 | 3.5 | 1.5 | 5.0 |
| Comparative Example 3-4 | 3.0 | 2.0 | 5.0 |
| Comparative Example 3-5 | 4.2 | 2.8 | 7.0 |

In Table 3, polymer A refers to the acrylamide copolymer solution of Hansol Chemical, and polymer C refers to the acryl emulsion of another company.

### Example 4-1 and Comparative Examples 4-1 and 4-2

Boehmite (average particle diameter: 0.15 µm) as inorganic particles in an amount of 92.3 parts by weight, ammonium polyacrylate (product name: HDA) of Hansol Chemical as a dispersant in an amount of 1.0 parts by weight, and ultra-pure water in an amount of 300 parts by weight are mixed and dispersed using a ball milling method or a mechanical stirrer to prepare a first slurry.

Then, 7.0 parts by weight of the acrylamide copolymer solution (polymer A) of Hansol Chemical are added to the first slurry as a polymer and dispersed to prepare a second slurry.

Thereafter, 0.1 part by weight of a leveling agent and 0.1 part by weight of a wetting agent are added to the second slurry and dispersed to prepare the composition for coating the uncoated portion of the battery of Example 4-1.

The compositions for coating the uncoated portion of the battery of Comparative Examples 4-1 and 4-2 are prepared in the same manner as in Example 4-1 except that the content of the leveling agent is changed. The content of the leveling agent used and a ratio of a weight of the leveling agent to a weight of the dispersant (the weight of the leveling agent / the weight of the dispersant) are shown in Table 4 below.

**[Table 4]**

| Composition for coating uncoated portion of battery | Content of leveling agent (parts by weight) | Leveling agent content / dispersant content |
|---|---|---|
| Example 4-1 | 0.3 | 0.3 |
| Comparative Example 4-1 | 0.1 | 0.1 |
| Comparative Example 4-2 | 0.2 | 0.2 |

### Examples 5-1 to 5-3

Boehmite (average particle diameter: 0.15 µm) as inorganic particles in an amount of 92.3 parts by weight, ammonium polyacrylate (product name: HDA) of Hansol Chemical as a dispersant in an amount of 1.0 parts by weight, and ultra-pure water in an amount of 300 parts by weight are mixed and dispersed using a ball milling method or a mechanical stirrer to prepare a first slurry.

Then, 5.6 parts by weight of the acrylamide copolymer solution (polymer A) of Hansol Chemical and 1.4 part by weight of A-200 styrene-butadiene rubber (polymer B) of Hansol Chemical are added to the first slurry as polymers and dispersed to prepare a second slurry.

Thereafter, 0.1 part by weight of a leveling agent and 0.1 part by weight of a wetting agent are added to the second slurry and dispersed to prepare the composition for coating the uncoated portion of the battery of Example 5-1.

The compositions for coating the uncoated portion of the battery of Examples 5-2 and 5-3 are prepared in the same manner as in Example 5-1 except that the content of the leveling agent is changed. The content of the leveling agent used and a ratio of a weight of the leveling agent to a weight of the dispersant (the weight of the leveling agent / the weight of the dispersant) are shown in Table 5 below.

**[Table 5]**

| Composition for coating uncoated portion of battery | Content of leveling agent (parts by weight) | Leveling agent content / dispersant content |
|---|---|---|
| Example 5-1 | 0.1 | 0.1 |
| Example 5-2 | 0.2 | 0.2 |
| Example 5-3 | 0.3 | 0.3 |

### Comparative Examples 6 to 8

Boehmite (average particle diameter: 0.15 µm) as inorganic particles in an amount of 92.3 parts by weight, ammonium polyacrylate (product name: HDA) of Hansol Chemical as a dispersant in an amount of 0.5 parts by weight, and ultra-pure water in an amount of 300 parts by weight are mixed and dispersed using a ball milling method or a mechanical stirrer to prepare a first slurry.

Then, 5.0 parts by weight of A-200 styrene-butadiene rubber (polymer B) of Hansol Chemical are added to the first slurry as a polymer and dispersed to prepare a second slurry.

Thereafter, 0.1 part by weight of a leveling agent and 0.1 part by weight of a wetting agent are added to the second slurry and dispersed to prepare the composition for coating the uncoated portion of the battery of Comparative Example 6.

Comparative Example 7 is prepared in the same manner as in Comparative Example 6 except that the polymer is changed from polymer B to an acryl emulsion (polymer C) of another company.

Comparative Example 8 is prepared in the same manner as in Comparative Example 6 except that the polymer is changed from polymer B to a polyvinyl alcohol solution (polymer D) of Hansol Chemical.

### [Evaluation Example 1: Measurement of Glass Transition Temperature (Tg) of Polymer]

10 mg to 20 mg of polymer A (the acrylamide copolymer solution of Hansol Chemical) is placed in a 40 µL aluminum pan, and a glass transition temperature (Tg) of polymer A is measured by confirming thermal behavior using a Differential Scanning Calorimeter (DSC).

A glass transition temperature (Tg) of polymer B (A-200 styrene-butadiene rubber of Hansol Chemical), polymer C (the acryl emulsion of another company), and polymer D (the polyvinyl alcohol solution of Hansol Chemical) is also measured in the same manner.

The measured glass transition temperatures (Tg) are shown in Table 6 below.

**[Table 6]**

| Polymer | Glass transition temperature (Tg, degrees Celsius) |
|---|---|
| Polymer A | 203 to 206 |
| Polymer B | 0 to 3 |
| Polymer C | 5 to 10 |
| Polymer D | 60 to 70 |

In Table 6, polymer A refers to the acrylamide copolymer solution of Hansol Chemical, polymer B refers to A-200 styrene-butadiene rubber of Hansol Chemical, polymer C refers to the acryl emulsion of another company, and polymer D refers to the polyvinyl alcohol solution of Hansol Chemical.

### [Evaluation Example 2: Measurement of Electrolyte Swelling Degree of Polymer]

A specimen of polymer A (the acrylamide copolymer solution of Hansol Chemical) is prepared by drying polymer A in a 5 cm × 2 cm rectangular frame at 60 degrees Celsius for 24 hours.

Specimens of polymer B (A-200 styrene-butadiene rubber of Hansol Chemical), polymer C (the acryl emulsion of another company), and polymer D (the polyvinyl alcohol solution of Hansol Chemical) are also prepared in the same manner.

The prepared specimen is immersed in an electrolyte (EC:DEC = 3:7, 99 parts by weight + VC 1 part by weight, 1.6 M LiPF₆) and left at 80 degrees Celsius for 2 hours, and then a weight of the changed specimen is measured to calculate a rate of weight change. EC refers to ethylene carbonate, DEC refers to diethyl carbonate, and VC refers to vinylene carbonate.

For polymer A and polymer B, electrolyte swelling degree over a long period of time is additionally measured by changing an immersion temperature and increasing an immersion time to 7 days.

Electrolyte swelling degrees of polymer A, polymer B, polymer C, and polymer D measured after being left at 80 degrees Celsius for 2 hours are shown in Table 7 below. In addition, electrolyte swelling degrees of polymer A and polymer B measured with an immersion period of 7 days are shown in Table 8 below.

**[Table 7]**

| Polymer | Electrolyte swelling degree (%) |
|---|---|
| Polymer A | 3 |
| Polymer B | 30 |
| Polymer C | 38 |
| Polymer D | 20 (discoloration) |

As a result of measurement, since a swelling degree of polymer C immersed in the electrolyte at 80 degrees Celsius for 2 hours exceeds 30%, it is confirmed that polymer C has low stability in the electrolyte. In addition, although a swelling degree of polymer D immersed in the electrolyte at 80 degrees Celsius for 2 hours is 20%, satisfying an electrolyte swelling degree range of the present disclosure, discoloration occurs, and thus it is confirmed that polymer D has low stability in the electrolyte.

In contrast, since an electrolyte swelling degree of polymer A immersed in the electrolyte at 80 degrees Celsius for 2 hours is 3% and an electrolyte swelling degree of polymer B is 30%, satisfying the electrolyte swelling degree range of the present disclosure, it is confirmed that polymer A and polymer B have high stability in the electrolyte.

**[Table 8]**

| | Electrolyte swelling degree (%) | |
|---|---|---|
| Immersion temperature (degrees Celsius) | Polymer A | Polymer B |
| 25 | 13 | 20 |
| 60 | 39 | 40 |
| 80 | 43 | 52 |

As a result of measurement, since an electrolyte swelling degree of polymer A immersed in the electrolyte at 25 degrees Celsius for 7 days is 13% and an electrolyte swelling degree of polymer B is 20%, satisfying the electrolyte swelling degree range of the present disclosure of 30% or less, it is confirmed that polymer A and polymer B also have excellent long-term electrolyte stability.

### [Evaluation Example 3: Measurement of Adhesive Strength of Composition for Coating Uncoated Portion of Battery]

After the compositions for coating the uncoated portion of the battery of the Examples and Comparative Examples are applied to aluminum foil, the first drying is performed at 50 degrees Celsius to 80 degrees Celsius for 5 minutes to 15 minutes. Then, temperature is raised to 100 degrees Celsius to 120 degrees Celsius, and the second drying is performed for 5 minutes to 15 minutes to form a coating layer on the uncoated portion. Here, a thickness of the formed coating layer on the uncoated portion is 4 µm to 10 µm.

The aluminum foil on which the coating layer on the uncoated portion is formed is cut to have a width of 25 mm and a length of 50 mm and is prepared. A 3M double-sided tape cut to have a width of 18 mm and a length of 70 mm is evenly attached on the coating layer on the uncoated portion of the prepared aluminum foil, and the attached structure is pressed three times without a gap using a rubber roll squeezer to prepare a specimen.

The specimen is mounted on a Universal Testing Machine (UTM) (1 kg to 3 kg load cell), one portion of the aluminum foil is fixed to an upper clip of a tensile tester, the double-sided tape is fixed to a lower clip, and 180° peel strength is measured at a speed of 1.33 mm/sec.

Five or more specimens of the aluminum foil on which the coating layer on the uncoated portion is formed are prepared for each sample and measured, and an average value thereof is calculated and used as adhesive strength.

### Adhesive Strength of Composition for Coating Uncoated Portion of Battery of Example 1-2, Example 2-1, Comparative Example 3-2, and Comparative Examples 6 to 8

Adhesive strength between a coating layer on an uncoated portion and the uncoated portion of an electrode formed by using the compositions for coating the uncoated portion of the battery of Examples 1-2, 2-1, and Comparative Examples 3-2 and 6 to 8 is shown in Table 9 below.

**[Table 9]**

| Composition for coating uncoated portion of battery | Adhesive strength (N/m) |
|---|---|
| Example 1-2 | 159.5 |
| Comparative example 6 | 37.4 |
| Comparative example 7 | 25.4 |
| Comparative example 8 | 115.9 |
| Example 2-1 | 194.5 |
| Comparative Example 3-2 | 152.9 |

As a result of measurement, when the composition for coating the uncoated portion of the battery of Example 1-2 including only polymer A is used, it is confirmed that an electrode having higher adhesive strength between the coating layer on the uncoated portion and the uncoated portion is manufactured compared with a case in which the composition for coating the uncoated portion of the battery of Comparative Example 6 including only polymer B, the composition for coating the uncoated portion of the battery of Comparative Example 7 including only polymer C, and the composition for coating the uncoated portion of the battery of Comparative Example 8 including only polymer D are used.

In addition, when the composition for coating the uncoated portion of the battery of Comparative Example 3-2 including both polymer A and polymer C is used, it is confirmed that an electrode having higher adhesive strength between the coating layer on the uncoated portion and the uncoated portion is manufactured compared with a case in which the composition for coating the uncoated portion of the battery of Comparative Example 6 including only polymer B, the composition for coating the uncoated portion of the battery of Comparative Example 7 including only polymer C, and the composition for coating the uncoated portion of the battery of Comparative Example 8 including only polymer D are used.

Furthermore, when the composition for coating the uncoated portion of the battery of Example 2-1 including both polymer A and polymer B is used, it is confirmed that an electrode having higher adhesive strength between the coating layer on the uncoated portion and the uncoated portion is manufactured compared with a case in which the composition for coating the uncoated portion of the battery of Example 1-2 including only polymer A, the composition for coating the uncoated portion of the battery of Comparative Example 6 including only polymer B, the composition for coating the uncoated portion of the battery of Comparative Example 7 including only polymer C, the composition for coating the uncoated portion of the battery of Comparative Example 8 including only polymer D, and the composition for coating the uncoated portion of the battery of Comparative Example 3-2 including both polymer A and polymer C are used.

Accordingly, when polymer A having strong cohesion with an inorganic material is used in combination with polymer B or polymer C having high penetration into aluminum foil at an appropriate ratio, the composition for coating the uncoated portion of the battery having excellent adhesive strength between the coating layer on the uncoated portion and the uncoated portion is acquired.

### Adhesive Strength of Composition for Coating Uncoated Portion of Battery of Examples 1-1 to 1-5 and Comparative Examples 1-1 and 1-2

Adhesive strength between a coating layer on an uncoated portion and the uncoated portion of an electrode formed using the compositions for coating the uncoated portion of the battery of Examples 1-1 to 1-5 and Comparative Examples 1-1 and 1-2 is shown in Table 10 below.

**[Table 10]**

| Composition for coating uncoated portion of battery | Adhesive strength (N/m) |
|---|---|
| Example 1-1 | 101.3 |
| Example 1-2 | 159.5 |
| Example 1-3 | 274.9 |
| Example 1-4 | 288.9 |
| Example 1-5 | 295.3 |
| Comparative Example 1-1 | 33.0 |
| Comparative Example 1-2 | 55.9 |

As a result of measurement, when the composition for coating an uncoated portion including only polymer A is used, adhesive strength between the coating layer on the uncoated portion and the uncoated portion increases as a content of polymer A increases. However, when a content of polymer A becomes 10 parts by weight (Comparative Example 1-2) and exceeds a range described in the present disclosure, it is confirmed that adhesive strength is decreased sharply.

In addition, when a content of polymer A is 1 part by weight (Comparative Example 1-1), 3 parts by weight (Example 1-1), or 5 parts by weight (Example 1-2), adhesive strength between the coating layer on the uncoated portion and the uncoated portion is less than 250 N/m, and it is confirmed that it is difficult to maintain a stable coating layer on the uncoated portion.

On the other hand, when a content of polymer A is 6 parts by weight (Example 1-3), 7 parts by weight (Example 1-4), or 8 parts by weight (Example 1-5), adhesive strength between the coating layer on the uncoated portion and the uncoated portion is equal to or larger than 250 N/m, and it is confirmed that a stable coating layer is maintained on the uncoated portion. Furthermore, when the composition for coating the uncoated portion including only polymer A is used, it is confirmed that a content of polymer A is preferably greater than 5 parts by weight and less than 10 parts by weight.

### Adhesive Strength of Composition for Coating Uncoated Portion of Battery of Examples 2-1 to 2-5

Adhesive strength between a coating layer on an uncoated portion and the uncoated portion of an electrode formed using the compositions for coating the uncoated portion of the battery of Examples 2-1 to 2-5 is shown in Table 11 below.

**[Table 11]**

| Composition for coating uncoated portion of battery | Adhesive strength (N/m) |
|---|---|
| Example 2-1 | 194.5 |
| Example 2-2 | 288.7 |
| Example 2-3 | 305.5 |
| Example 2-4 | 285.4 |
| Example 2-5 | 301.1 |

As a result of measurement, when a composition for coating the uncoated portion including both polymer A and polymer B is used, adhesive strength between the coating layer on the uncoated portion and the uncoated portion is higher when a sum of a content of polymer A and a content of polymer B is 7 parts by weight (Examples 2-2 to 2-5) than when the sum is 5 parts by weight (Example 2-1).

In addition, when the sum of a content of polymer A and a content of polymer B is 7 parts by weight (Examples 2-2 to 2-5), adhesive strength between the coating layer on the uncoated portion and the uncoated portion is equal to or larger than 250 N/m, and it is confirmed that a stable coating layer is maintained on the uncoated portion. Furthermore, when the composition including both polymer A and polymer B is used, it is confirmed that a total content of polymer is preferably larger than 5 parts by weight.

Furthermore, when the composition of Example 2-2 in which the ratio of the weight of polymer A to the weight of polymer B (the weight of polymer A / the weight of polymer B) is 4 and satisfies the range described in the present disclosure is used, it is confirmed that higher adhesive strength is realized.

### Adhesive Strength of Composition for Coating Uncoated Portion of Battery of Examples 3-1, 3-2, and Comparative Examples 3-1 to 3-5

Adhesive strength between a coating layer on an uncoated portion and the uncoated portion of an electrode formed using the compositions for coating the uncoated portion of the battery of Examples 3-1 and 3-2 and Comparative Examples 3-1 to 3-5 is shown in Table 12 below.

**[Table 12]**

| Composition for coating uncoated portion of battery | Adhesive strength (N/m) |
|---|---|
| Example 3-1 | 191.1 |
| Example 3-2 | 271.8 |
| Comparative Example 3-1 | 154.0 |
| Comparative Example 3-2 | 152.9 |
| Comparative Example 3-3 | 160.3 |
| Comparative Example 3-4 | 161.7 |
| Comparative Example 3-5 | 172.9 |

As a result of measurement, when a composition for coating an uncoated portion including both polymer A and polymer C is used, adhesive strength between a coating layer on an uncoated portion and the uncoated portion is higher when a sum of a content of polymer A and a content of polymer C is 7 parts by weight (Examples 3-1, 3-2, and Comparative Example 3-5) than when the sum is 5 parts by weight (Comparative Examples 3-1 to 3-4), and thus it is confirmed that, when a composition including both polymer A and polymer C is used, a total content of polymer is preferably greater than 5 parts by weight.

In addition, in a situation in which 7 parts by weight of the composition including both polymer A and polymer C is used, when the ratio of the weight of polymer A to the weight of polymer C (the weight of polymer A / the weight of polymer C) is 4 (Example 3-2), adhesive strength of equal to or larger than 250 N/m is exhibited, and it is confirmed that the ratio of the weight of polymer A to the weight of polymer C (the weight of polymer A / the weight of polymer C) is preferably equal to or larger than 3 and equal to or less than 6.

### Adhesive Strength of Composition for Coating Uncoated Portion of Battery of Example 4-1 and Comparative Examples 4-1 and 4-2

Adhesive strength between a coating layer on an uncoated portion and the uncoated portion of an electrode formed using the compositions for coating the uncoated portion of the battery of Example 4-1 and Comparative Examples 4-1 and 4-2 is shown in Table 13 below.

**[Table 13]**

| Composition for coating uncoated portion of battery | Adhesive strength (N/m) |
|---|---|
| Example 4-1 | 300.4 |
| Comparative Example 4-1 | 129.5 |
| Comparative Example 4-2 | 36.4 |

As a result of measurement, when the composition for coating the uncoated portion of the battery (Comparative Example 4-1) including 0.1 part by weight of the leveling agent and 1.0 part by weight of the dispersant is used, the ratio of the weight of the leveling agent to the weight of the dispersant (the weight of the leveling agent / the weight of the dispersant) is 0.1, adhesive strength between the coating layer on the uncoated portion and the uncoated portion is less than 250 N/m, and it is confirmed that it is difficult to maintain a stable coating layer on the uncoated portion.

On the other hand, when the composition for coating the uncoated portion of the battery (Example 1-4) including 0.1 part by weight of the leveling agent and 0.5 part by weight of the dispersant is used, the ratio of the weight of the leveling agent to the weight of the dispersant (the weight of the leveling agent / the weight of the dispersant) is 0.2, adhesive strength between the coating layer on the uncoated portion and the uncoated portion is 288.9 N/m and is equal to or larger than 250 N/m. when the composition for coating the uncoated portion of the battery (Example 4-1) including 0.3 part by weight of the leveling agent and 1.0 part by weight of the dispersant is used, the ratio of the weight of the leveling agent to the weight of the dispersant (the weight of the leveling agent / the weight of the dispersant) is 0.3, adhesive strength between the coating layer on the uncoated portion and the uncoated portion is also equal to or larger than 250 N/m, and thus a stable coating layer is maintained on the uncoated portion. Therefore, it is confirmed that the ratio of the weight of the leveling agent to the weight of the dispersant (the weight of the leveling agent / the weight of the dispersant) is equal to or larger than 0.2, the ratio of the weight of the dispersant to the weight of the inorganic particle (the weight of the dispersant / the weight of the inorganic particle) is equal to or larger than 0.005 and equal to or less than 0.015, and the ratio of the weight of the leveling agent to the weight of the polymer (the weight of the leveling agent / the weight of the polymer) is equal to or larger than 0.02 and equal to or less than 0.45 are preferable.

### Adhesive Strength of Composition for Coating Uncoated Portion of Battery of Examples 5-1 to 5-3

Adhesive strength between a coating layer on an uncoated portion and the uncoated portion of an electrode formed using the compositions for coating the uncoated portion of the battery of Examples 5-1 to 5-3 is shown in Table 14 below.

**[Table 14]**

| Composition for coating uncoated portion of battery | Adhesive strength (N/m) |
|---|---|
| Example 5-1 | 531.9 |
| Example 5-2 | 479.8 |
| Example 5-3 | 411.9 |

As a result of measurement, when the composition for coating the uncoated portion of the battery (Example 5-1) including 0.1 part by weight of the leveling agent and 1.0 part by weight of the dispersant is used, the ratio of the weight of the leveling agent to the weight of the dispersant (weight of leveling agent / weight of dispersant) is 0.1. When the composition (Example 5-2) including 0.2 part by weight of the leveling agent and 1.0 part by weight of the dispersant is used, the ratio is 0.2. When the composition (Example 5-3) including 0.3 part by weight of the leveling agent and 1.0 part by weight of the dispersant is used, the ratio is 0.3. In addition, adhesive strength between the coating layer on the uncoated portion and the uncoated portion is equal to or larger than 250 N/m in all cases, so that a stable coating layer is maintained on the uncoated portion. Therefore, it is confirmed that the ratio of the weight of the leveling agent to the weight of the dispersant (the weight of the leveling agent / the weight of the dispersant) is preferably equal to or larger than 0.1, the ratio of the weight of the dispersant to the weight of the inorganic particle (the weight of the dispersant / the weight of the inorganic particle) is preferably equal to or larger than 0.005 and equal to or less than 0.015, and the ratio of the weight of the leveling agent to the weight of the polymer (the weight of the leveling agent / the weight of the polymer) is preferably equal to or larger than 0.01 and equal to or less than 0.5.

The scope of the present disclosure is indicated by the following claims rather than the above detailed description, and all changes or modifications derived from the meaning and scope of the claims and their equivalents should be interpreted as being included in the scope of the present disclosure.

### Industrial Applicability

As described above, the composition for coating the uncoated portion of the battery of the present disclosure has excellent adhesive strength between the coating layer on the uncoated portion and the uncoated portion of the electrode, so that the coating layer is stably formed.

In addition, since the composition for coating the uncoated portion of the battery of the present disclosure has excellent heat resistance and excellent electrolyte stability, the electrode in which the uncoated portion is coated using the composition for coating the uncoated portion of the battery of the present disclosure effectively prevents occurrence of a short circuit, and stability of the battery may be increased.

## Claims

1. A composition for coating an uncoated portion of a battery, the composition comprising:
a polymer;
inorganic particles; and
a solvent.

2. The composition of claim 1, wherein a glass transition temperature (Tg) of the polymer is 0 degrees Celsius or more and 230 degrees Celsius or less.

3. The composition of claim 1, wherein an electrolyte swelling degree of the polymer at room temperature is 30% or less.

4. The composition of claim 1, wherein the polymer comprises an acrylamide copolymer, styrene-butadiene rubber, an acrylate polymer, an acrylate copolymer, a methacrylate polymer, a methacrylate copolymer, an acrylic acid polymer, an acrylic acid copolymer, a vinyl alcohol polymer, a styrene polymer, or a combination thereof.

5. The composition of claim 4, wherein the acrylamide copolymer comprises an acrylamide-based monomer unit and a vinylpyrrolidone-based monomer unit, and
wherein a ratio of a number of moles of the acrylamide-based monomer unit to a number of moles of the vinylpyrrolidone-based monomer unit (number of moles of acrylamide-based monomer unit/ number of moles of vinylpyrrolidone-based monomer unit) is 1 or more and 3.5 or less.

6. The composition of claim 4, wherein the polymer comprises the acrylamide copolymer and the styrene-butadiene rubber.

7. The composition of claim 6, wherein a ratio of a weight of the acrylamide copolymer to a weight of the styrene-butadiene rubber (the weight of the acrylamide copolymer / the weight of the styrene-butadiene rubber) is 1 or more and 10 or less.

8. The composition of claim 4, wherein the polymer comprises the acrylamide copolymer and the acrylate polymer.

9. The composition of claim 8, wherein a ratio of a weight of the acrylamide copolymer to a weight of the acrylate polymer (the weight of the acrylamide copolymer / the weight of the acrylate polymer) is 2 or more and 6 or less.

10. The composition of claim 1, wherein the inorganic particles comprise alumina, boehmite, or a combination thereof.

11. The composition of claim 1, wherein a ratio of a weight of the inorganic particles to a weight of the polymer (the weight of the inorganic particles / the weight of the polymer) is 5 or more and 20 or less.

12. The composition of claim 1, further comprising:
a dispersant; and
a leveling agent,
wherein a ratio of a weight of the leveling agent to a weight of the dispersant (the weight of the leveling agent / the weight of the dispersant) is 0.1 or more and 0.3 or less.

13. The composition of claim 1, further comprising:
a dispersant; and
a leveling agent,
wherein a ratio of a weight of the dispersant to a weight of the inorganic particles (the weight of the dispersant / the weight of the inorganic particles) is 0.005 or more and 0.015 or less, and
wherein a ratio of a weight of the leveling agent to a weight of the polymer (the weight of the leveling agent / the weight of the polymer) is 0.01 or more and 0.5 or less.

14. A method for coating an uncoated portion of a battery, the method comprising:
coating the composition for coating the uncoated portion of the battery of any one of claim 1 to claim 13 on the uncoated portion.

15. The method of claim 14, wherein the coating is a doctor blade coating, a dip coating, a gravure coating, a slit die coating, a spin coating, a comma coating, a bar coating, a reverse roll coating, a screen coating, or a cap coating.

16. The method of claim 14, further comprising:
performing a first drying after the coating.

17. The method of claim 16, further comprising:
performing a second drying after the first drying.

18. An electrode comprising a coating layer of an uncoated portion, the coating layer comprising the composition for coating the uncoated portion of the battery of any one of claim 1 to claim 13.

19. The electrode of claim 18, wherein the coating layer is formed on one surface or both surfaces of the uncoated portion of the electrode, and a thickness of the coating layer is 4 µm or more and 10 µm or less.

20. The electrode of claim 18, wherein adhesive strength between the uncoated portion and the coating layer on the uncoated portion is 200 N/m or more.
